# EUROPÄISCHE PATENTSCHRIFT

(11) **EP 2 088 264 B1**
(45) Veröffentlichungstag und Bekanntmachung des Hinweises auf die Patenterteilung: **11.07.2012**
(21) Anmeldenummer: 09007277.8
(22) Anmeldetag: 26.01.2007
(51) Int. Cl.: E05B 47/00, H02K 7/18

(54) **Vorrichtung zum Betätigen eines Sperrgliedes mit einem elektrischen Generator**
Apparatus for actuating a locking element with an electrical generator
Dispositif pour actioner un élément de fermeture, pourvu d'un générateur électrique

(30) Priorität: 21.02.2006 AT 2822006
(43) Veröffentlichungstag der Anmeldung: 12.08.2009
(62) Teilanmeldung aus: 07701280.5
(73) Patentinhaber: Evva Sicherheitstechnologie GmbH, 1120 Wien (AT)
(72) Erfinder: Pöllabauer, Reinhard, Ing., 1120 Wien (AT)
(74) Vertreter: Haffner und Keschmann Patentanwälte OG

(56) Entgegenhaltungen:
- WO-A-96/18790
- DE-A1- 19 620 880
- DE-C1- 19 918 817
- US-A- 3 457 522
- US-A- 4 471 353

## Beschreibung

Die Erfindung betrifft eine Vorrichtung, beispielsweise Schlüssel oder Schließzylinder, zum Betätigen eines Sperrgliedes, mit einem Wandler zum Wandeln von mechanischer in elektrische Energie umfassend einen Magnetkreis und eine von dessen Magnetfluss durchsetzte Induktionsspule, wobei der Magnetkreis oder die Induktionsspule als beweglicher Bauteil und der jeweils andere Teil als feststehender Bauteil ausgebildet ist und der bewegliche Bauteil von einer Blattfeder (7) gehalten ist und zu Schwingbewegungen in lediglich einer Ebene auslenkbar angeordnet ist.

Elektrische oder elektronische Schlösser, insbesondere Zylinderschlösser enthalten in der Regel zusätzlich zu mechanischen Verriegelungen, welche mit konventionellen Schlüsseln mechanisch sperrbar sind, wenigstens einen elektromagnetisch oder motorisch betätigbaren Verriegelungsmechanismus, welcher erst nach einer Identifikationsprüfung freigegeben wird. Die elektronische Schaltung zur Identifikationsüberprüfung wirkt hierbei meist mit geeigneten Identifikationsmedien drahtlos oder drahtgebunden zusammen, wobei in der elektronischen Auswerteschaltung eine Überprüfung erfolgt, ob das jeweilige Identifikationsmedium die Berechtigung zum Sperren des Schlosses aufweist. Nach erfolgreicher Überprüfung der Identität erfolgt dann die Freigabe des Schlosses.

Zur Energieversorgung derartiger elektrischer bzw. elektronischer verriegelungen ist in der Regel eine ständige Energieversorgung des Schlosses und oft auch des Schlüssels erforderlich und es ist daher neben dem Aufwand für eine derartige ständige Energieversorgung auch dafür Sorge zu tragen, dass eine unterbrechungsfreie Stromversorgung zur Verfügung steht, um die Funktion des Schlosses in jeder Situation aufrecht zu erhalten.

Elektrische oder elektronische Schlösser können nun in beliebiger Weise mit Energie versorgt werden. Neben der Möglichkeit eines Netzanschlusses oder einer Stützbatterie sind auch bereits vorschläge bekannt geworden, bei welchen das Schloss oder der Schlüssel einen Wandler zum Wandeln von mechanischer in elektrische Energie aufweist. Derartige Wandler sind beispielsweise als elektrischer Generator ausgebildet und weisen einen Magnetkreis und eine von dessen Magnetfluss durchsetzte Induktionsspule auf, wobei der Magnetkreis oder die Induktionsspule als beweglicher Bauteil und der jeweils andere Teil als feststehender Bauteil ausgebildet ist. Dabei wird durch die Bewegung des beweglich angeordneten Bauteils im induktionssystem eine Induktionsspannung induziert. Der bewegliche Bauteil kann beispielsweise als schwungrad ausgebildet sein, wie dies beispielsweise aus der EP 1039074 A1 bekannt geworden ist. Durch eine derartige Ausbildung wird eine autarke Energieversorgung sichergestellt, da die vom Schwungradgenerator erzeugte elektrische Energie in einem Energiespeicher zwischengespeichert werden kann und im Bedarfsfall dem elektrischen Schaltkreis für die Identifikationsprüfung bzw. für die elektrische Betätigung des Schlosses zur Verfügung gestellt wird.

Schwungradgeneratoren sind aber beispielsweise für stationär angeordnete Schlösser insofern nicht brauchbar, als das Schwungrad nicht ohne weiteres in Bewegung versetzt werden kann, wenn auf externe Betätigungsvorrichtungen verzichtet werden soll. Schwungradgeneratoren sind bestenfalls für die Integration in Schlüssel geeignet, da das Schwungrad in diesem Fall ähnlich wie bei Armbanduhren durch das ständige Mittragen und die dabei verursachten mechanischen Erschütterungen in Bewegung versetzt wird. Ein weiterer Nachteil von Schwungradgeneratoren ist die relativ ineffiziente Arbeitsweise, da die Lagerung des Schwungrads nicht unerhebliche Reibungsverluste mit sich bringt.

Aus der DE 196 20 880 A1 ist ein Verfahren und eine Vorrichtung zur Erzeugung von elektrischer Energie für den Betrieb elektrischer Kleingeräte bekannt geworden. Die Spannungsquelle besteht aus einem durch die manuelle Betätigung eines Funktionsauslöseelements mit Bewegungsenergie versorgten mechanisch/elektrischen Wandlers. Der Wandler umfasst hierbei eine Schwingfeder.

Die US 4,471,353 beschreibt einen Schalter, dessen Bewegung mit einem elektromechanischen Wandler zur Erzeugung von elektrischer Energie zusammen wirkt.

Die vorliegende Erfindung zielt daher darauf ab, einen Wandler der eingangs genannten Art zum Wandeln von mechanischer in elektrische Energie bereit zu stellen, welcher beispielsweise für Schlüssel oder Schließzylinder zum Einsatz gelangen kann und welcher sich durch eine bessere Ausnutzung der eingebrachten mechanischen Energie auszeichnet und durch welchen beispielsweise Reibungsverluste minimiert werden können. Weiters soll durch die Erfindung das Einbringen der mechanischen Energie erleichtert werden, sodass der Wandler beispielsweise auch für stationäre Einrichtungen, wie beispielsweise Schließzylinder, geeignet ist.

Zur Lösung dieser Aufgabe besteht die erfindungsgemäße Ausbildung im Wesentlichen darin, dass die Blattfeder außerhalb der Schwingebene am beweglichen Teil angreift. Dadurch, dass der mechanisch bewegbare Teil des Wandlersystems nun von einer Blattfeder gehalten wird, wird eine reibungsfreie Führung des bewegten Teils erzielt, wobei durch die Ausgestaltung der Feder als Blattfeder lediglich eine Bewegung in einer einzigen Ebene zugelassen wird, sodass eine exakte Führung gewährleistet ist. Durch eine derartige Ausbildung können die Abstände zwischen dem beweglichen Bauteil und dem feststehenden Bauteil sehr klein gewählt werden, da durch die exakte Führung keine Toleranzen zu berücksichtigen sind. Durch die Verwendung einer Blattfeder als Halteteil für den beweglichen Bauteil wird nach einer entsprechenden Auslenkung des Bauteils eine Schwingbewegung ausgeführt, sodass in der Induktionsspule magnetische Flussänderungen pro Zeiteinheit hervorgerufen werden und somit eine Spannung induziert wird. Da erfindungsgemäß eine Schwingbewegung vorgesehen ist, kann dem System bei jeder Periode der Schwingung Energie entnommen werden und es ist somit möglich die eingebrachte mechanische Energie nahezu vollständig in elektrische Energie umzuwandeln. Durch die Gestaltung des Halteelements für den beweglichen Teil als Blattfeder gelingt es Oberflächenberührungen zwischen dem bewegten und dem feststehenden Teil zu verhindern, sodass die Reibungsverluste eliminiert werden.

Um eine Kollision des schwingenden Systems mit dem feststehenden Bauteil zu verhindern, ist die Ausbildung erfindungsgemäß derart getroffen, dass die Blattfeder außerhalb der Schwingebene am beweglichen Teil angreift.

Prinzipiell ist es im Rahmen der Erfindung sowohl denkbar den Magnetkreis als feststehenden Bauteil und die Induktionsspule als beweglichen Bauteil auszubilden, als auch umgekehrt die Induktionsspule als feststehenden Bauteil und den Magnetkreis als beweglichen Bauteil auszubilden. Bevorzugt ist jedoch eine Ausbildung, bei welcher die Induktionsspule als feststehender Bauteil und der Magnetkreis als beweglicher Bauteil ausgebildet ist, da der Magnetkreis insbesondere dann, wenn er Permanentmagneten aufweist, eine autarke Struktur bildet, die durch keinerlei Anschlüsse mit anderen Bauteilen verbunden ist, wohingegen die Induktionsspule mit einem Spannungsabgriff versehen sein muss.

Der vorzugsweise zu mechanischen Schwingungen angeregte Magnetkreis kann verschiedenartig ausgeführt sein, wobei mit Vorzug eine Ausbildung vorgesehen ist, bei welcher der Magnetkreis zwei parallel in Abstand voneinander angeordnete Permanentmagneten aufweist, wobei die Induktionsspule im Raum zwischen den beiden Magneten jeweils unter Einhaltung eines Spaltes angeordnet und der bewegliche Bauteil zu Schwingbewegungen quer zur Richtung des Magnetflusses auslenkbar angeordnet ist.

Weiters ist bevorzugt vorgesehen, dass der Magnetkreis wenigstens einen Permanentmagneten aufweist, welcher von der Induktionsspule umgriffen ist. Der Magnetkreis selbst kann bevorzugt als beidseitig geschlossener Magnetkreis ausgebildet sein. Alternativ ist aber auch eine Ausbildung denkbar, bei welcher der Magnetkreis einseitig offen ist. Die Ausbildung mit beidseitig geschlossenem Magnetkreis hat jedoch den Vorteil, dass sich der magnetische Fluss dabei auf beide Seiten ungefähr gleich aufteilt, somit die magnetische Sättigung des ferromagnetischen Materials des Magneten weniger schnell erreicht wird. Beim einseitig offenen Magnetkreis wird sich hingegen nur ein kleiner Teil der magnetischen Feldlinien über den offenen Teil schließen. Ein weiterer Vorteil des beidseitig geschlossenen Magnetkreises liegt darin, dass hier die Streuung des Magnetflusses in die Umgebung geringer ist, während der einseitig offene Magnetkreis eine dementsprechende magnetische Streuung besitzt.

Neben der bereits erwähnten Verwendung von zwei Magneten, zwischen welchen die Induktionsspule angeordnet ist, ist auch eine Ausbildung mit lediglich einem Magneten denkbar. Es hat sich jedoch gezeigt, dass es für die Homogenität des Magnetfeldes, d.h. der magnetischen Flussdichte, im Luftspalt, in welchem ein Teil der Spule liegt, günstig ist, wenn man statt eines einzigen Magneten oberhalb und unterhalb der Spule je einen Magneten mit dem halben Magnetmaterial einbaut.

Wie bereits erwähnt, wird durch die Verwendung einer Blattfeder zur Aufhängung und Führung des beweglichen Bauteils eine äußerst effiziente Umwandlung der mechanischen in elektrische Energie gewährleistet und es gelingt beispielsweise bereits bei geringen Vibrationen mechanische Energie in das Wandlersystem einzubringen, wobei es zu einer Auslenkung des von der Blattfeder gehaltenen beweglichen Bauteils und zu entsprechenden Schwingbewegungen kommt. Eine Optimierung kann dahingehend erfolgen, dass die Resonanzfrequenz des mechanischen Systems auf die Frequenz der zu erwartenden Vibrationen abgestimmt wird und die Blattfeder dementsprechend ausgelegt wird. Durch Verwendung einer steiferen Feder kann beispielsweise die Federkraft verstärkt werden und damit mehr mechanische Energie ins System eingebracht werden. Auch die Erhöhung der mechanischen Frequenz des mechanischen Schwingsystems führt zu einer Leistungssteigerung und es können auf diese Art und weise höhere Spannungen an der Spule abgegriffen werden. Wenn die Frequenz der mechanischen Schwingung erhöht wird, wird die Periodendauer bei gleich bleibendem Weg, den die schwingende Masse zurücklegt, kleiner, sodass höhere Geschwindigkeiten auftreten. Dies bedeutet, dass die Flussänderung in der Zeiteinheit pro Windung der Induktionsspule höher wird und somit eine höhere Spannung induziert wird.

Eine weitere Optimierung der erfindungsgemäßen Ausbildung gelingt mit Vorteil dadurch, dass die Blattfeder mäanderartig geformt ist. Durch eine derartige Formgebung wird die Auslösecharakteristik des mechanischen Schwingsystems verbessert und eine stabilere Führung gewährleistet. Eine weitere Verbesserung gelingt dadurch, dass der Mäander in Richtung zur Angriffsstelle am beweglichen Teil hin eine Verjüngung aufweist, wobei auch durch diese Maßnahme die Auslösecharakteristik des mechanischen Schwingsystems verbessert wird. Ein weiterer Vorteil liegt im geringeren Platzbedarf des verjüngt ausgebildeten Mäanders.

Die Anwendungsgebiete des erfindungsgemäßen wandlers sind vielfältig. Bezogen auf die Schließtechnik ist sowohl eine Integration des Wandlers in einen Schlüssel oder Codeträger als auch in einen Schließzylinder oder Beschlag denkbar. Gemäß einer bevorzugten Weiterbildung ist daher vorgesehen, dass der Wandler in einem Schloss, vorzugsweise im Zylindergehäuse eines Zylinderschlosses, derart angeordnet ist, dass die Schwingebene des beweglichen Bauteils parallel zur Einführrichtung eines Schlüssels verläuft, wobei der bewegliche Bauteil beim Einführen des Schlüssels mit einem Mitnehmer des Schlüssels zusammenwirkt und zu Schwingbewegungen ausgelenkt wird. Bei einer derartigen Ausbildung genügt es den Mitnehmer derart anzuordnen, dass beim Einführen des Schlüssels eine Kollision mit dem beweglich angeordneten Teil des Wandlersystems auftritt, wodurch der beweglich angeordnete Teil ausgelenkt wird und nach Freigabe frei ausschwingen kann, wobei bei jeder Periode des Schwingvorgangs dem System elektrische Energie entzogen werden kann. Die so gewonnene elektrische Energie wird unmittelbar dem Stromkreis des Zylinderschlosses bzw. der Zylinderelektronik zur Verfügung gestellt, wobei der im Schlüssel abgespeicherte elektronische Code ausgelesen und ausgewertet und bei Feststellen einer Zutrittsberechtigung das elektrische Schloss betätigt werden kann. Somit wird die elektrische Energie beim Einführen des Schlüssels genau zu jenem Zeitpunkt generiert, zu welchem sie benötigt wird, wobei eine zwischenspeicherung der elektrischen Energie der Einfachheit halber auch entfallen könnte.

Bei einem weiteren Anwendungsgebiet ist bevorzugt vorgesehen, dass der Wandler in der Raide eines Schlüssels angeordnet ist. Die im Schlüssel beim Mitsichtragen des Schlüssels erzeugte Energie kann hierbei unmittelbar der schlüsseleigenen Elektronik zur Verfügung gestellt werden oder kann beispielsweise auch zwischengespeichert werden und beim Einführen des Schlüssels in ein Schloss über am Schlüssel vorgesehene Kontakte dem Schloss sowie dessen Steuer- und Öffnungs-bzw. Schließelektronik zur Verfügung gestellt werden.

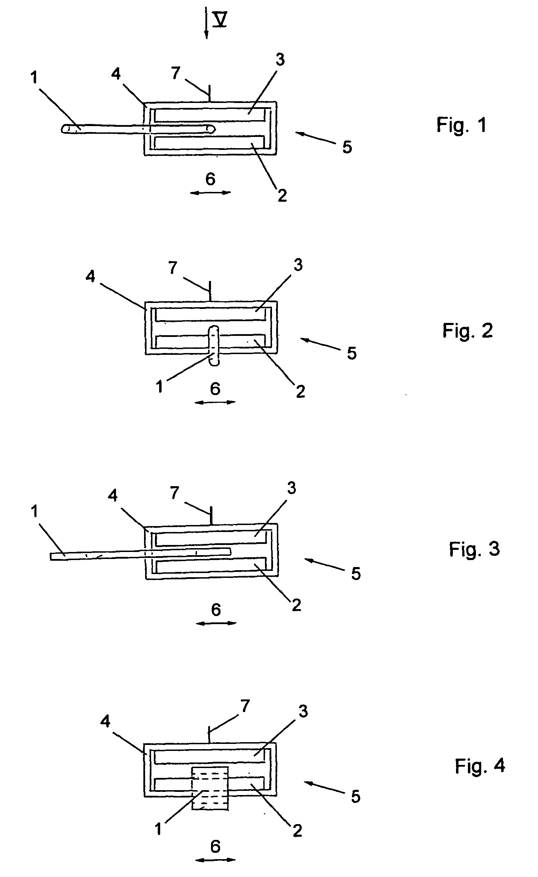

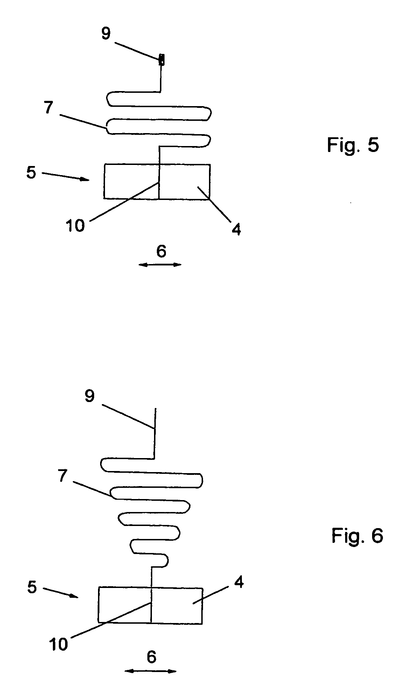

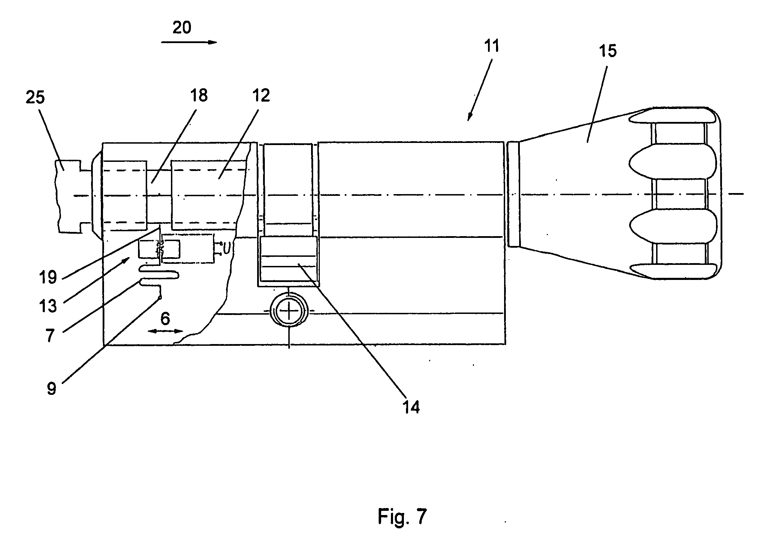

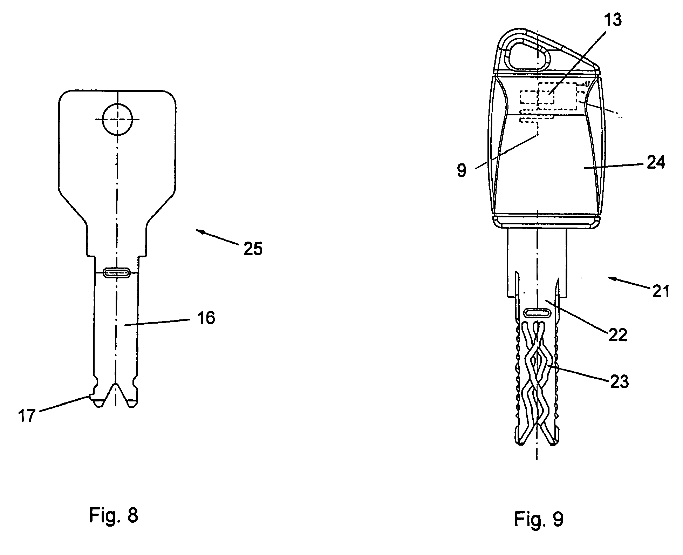

Die Erfindung wird nachfolgend anhand eines in der Zeichnung schematisch dargestellten Ausführungsbeispieles näher erläutert. In dieser zeigen Fig.1 bis Fig.4 den mechanischen Aufbau des Wandlers in einer ersten Ausführungsform, Fig.5 eine Draufsicht auf den Wandler, Fig.6 eine abgewandelte Ausbildung der Ausführung gemäß Fig.5, Fig.7 eine schematische Darstellung eines Zylinderschlosses mit eingebautem Wandler, Fig.8 eine schematische Darstellung eines Schlüssels zur Verwendung mit dem Zylinderschloss gemäß Fig.7 und Fig.9 eine schematische Darstellung eines Schlüssels mit eingebautem Wandler.

In Fig.1 ist eine feststehende Induktionsspule 1 dargestellt, welche in einem Luftspalt zwischen zwei Permanentmagneten 2 und 3 angeordnet ist, wobei die Permanentmagneten 2 und 3 gemeinsam mit der metallischen Einfassung 4 den Magnetkreis 5 ausbilden. Der Magnetkreis 5 ist hierbei als beweglicher Bauteil ausgebildet und ist zu Schwingungen entsprechend dem Doppelpfeil 6 auslenkbar. Die Aufhängung des Magnetkreises 5 erfolgt über eine in den nachfolgenden Figuren näher dargestellte Blattfeder 7.

In Fig.2 ist eine alternative Ausbildung dargestellt, bei welcher die Spule 1 lediglich den unteren der beiden Magneten, nämlich den mit 2 bezeichneten Magneten, umgreift. Sowohl bei der Ausbildung nach Fig.1 als auch bei der Ausbildung nach Fig.2 ist der Magnetkreis 5 als geschlossener Magnetkreis 5 ausgebildet. Denkbar ist allerdings auch die Verwendung eines offenen Magnetkreises, wobei in diesem Fall beispielsweise die mit 8 bezeichnete Seitenwand fehlen würde.

In der Darstellung gemäß Fig.3 ist eine weitere alternative Ausbildung gezeigt, bei welcher die Spule 1 in die Länge gezogen ausgebildet ist. Eine alternative Ausbildung mit einer ebenfalls in die Länge gezogenen Spule ist in Fig.4 gezeigt.

In Fig.5 ist nun eine Draufsicht auf den Magnetkreis entsprechend dem Pfeil V der Fig.1 dargestellt und es ist ersichtlich, dass die Blattfeder 7 mäanderartig geformt ist. Dabei ist ersichtlich, dass die Blattfeder 7 an einem stationären Anlenkpunkt 9 befestigt ist und etwa mittig an der Stelle 10 am Magnetkreis 5 angreift. Die Schwingbewegung des Magnetkreises 5 ist wiederum durch den Doppelpfeil 6 dargestellt, wobei die Schwingungen lediglich in einer Ebene Stattfinden, welche im Fall der Fig.5 der zeichnungsebene entspricht.

Bei der Darstellung gemäß der Fig.6 ist die Blattfeder 7 wiederum mäanderförmig ausgebildet, wobei der Mäander in Richtung zur Angriffsstelle 10 hin eine Verjüngung aufweist. Dadurch wird der Platzbedarf für das mechanische Schwingsystem verringert und die Auslösecharakteristik verbessert.

In Fig.7 ist ein Schließzylinder 11 mit einem zylindergehäuse 12 dargestellt, in welchem der erfindungsgemäße Wandler 13 integriert ist. Der Schließzylinder 11 weist zur Betätigung der Sperrnase bzw. Sperrglieds 14 einen Knauf 15 auf. An der gegenüberliegenden Seite weist der Zylinderkern 26 einen Schlüsselkanal zum Einführen eines Schlüssels auf, wobei der Schlüssel beispielsweise entsprechend der Fig.8 ausgebildet sein kann.

Der Schlüssel 25 ist dabei lediglich schematisch dargestellt, wobei an der mit 16 bezeichneten Stelle Platz für eine mechanische und/oder elektrische Codierung vorgesehen ist. Die Besonderheit des Schlüssels 25 liegt in der Anordnung eines Mitnehmers 17, wobei der entsprechende Zylinderkern bzw. Schließzylinder 26 an der Unterseite eine Längsnut aufweist, welche das Einführen des Schlüssels 25 ermöglicht und Platz für die Schwingbewegungen des Wandlers 13 bietet. Der Zylinderkern 26 weist an der Stelle 18 einen verkleinerten Kerndurchmesser auf, wobei ein Gegenanschlag 19 des Magnetkreises in den durch den verkleinerten Kerndurchmesser 18 geschaffenen Platz ragt, sodass bei Einführen des Schlüssels 25 in den Schlüsselkanal der Mitnehmer 17 mit dem Gegenanschlag 19 kollidiert und diesen in Einführrichtung 20 des Schlüssels mitnimmt. Sobald der Gegenanschlag 19 soweit in Einführrichtung 20 mitgenommen wurde, dass er vom Mitnehmer 17 abgleitet, erfolgt die Freigabe des Magnetkreises, welcher in der Folge entsprechend dem Doppelpfeil 6 ausschwingen kann, wobei elektrische Energie generiert wird.

In Fig.9 ist ein konventioneller Schlüssel 21 dargestellt, der am Schlüsselbart 22 eine mechanische Codierung 23 trägt und eine Raide 24 aufweist. In der Raide 24 ist nun schematisch die Anordnung des erfindungsgemäßen Wandlers 13 angedeutet, welcher durch Vibrationen des Schlüssels, wie sie beispielsweise beim Mitführen in einer Hosen- oder Handtasche auftreten, in Schwingung versetzt wird, wobei die dadurch ins Wandlersystem eingeführte mechanische Energie in elektrische Energie gewandelt wird. Die hierbei generierte elektrische Energie kann durch nicht näher dargestellte Speicherelemente zwischengespeichert werden und dient beispielsweise einer Steuerelektronik des Schlüssels 25 als Versorgungsspannung über einen längeren Zeitraum.

Neben den oben beschriebenen Anwendungsfällen ist noch eine Vielzahl weiterer Anwendungsfälle denkbar und es ist beispielsweise eine Vielzahl von Möglichkeiten zur Auslösung der Schwingbewegungen des wandlers denkbar. Neben der zuvor beschriebenen Möglichkeit des Zusammenwirkens eines auf einem Schlüssel angeordneten Mitnehmers mit einem Gegenanschlag des Schwingsystems ist es auch denkbar die Blattfeder über geeignete Steuerkurven, beispielsweise durch eine Drehbewegung des Türknaufes, zu spannen.

Insbesondere bei Verwendung von Magneten mit hohen Flussdichten lassen sich mit dem erfindungsgemäßen Wandler hohe Ausgangsspannungen an der Spule erzielen, sodass auf die Verwendung von Upsteppern oder Spannungsmultiplikationsschaltungen oft verzichtet werden kann. Lediglich bei Ausbildungen mit geringen Ausgangsspannungen, welche beispielsweise lediglich mechanische Energie in Form von Vibrationen oder Erschütterungen aufnehmen, kann es nötig sein vor oder nach der Speicherung der elektrischen Energie Upstepper oder Spannungsmultiplikationsschaltungen einzusetzen.

## Patentansprüche

1. Vorrichtung, beispielsweise Schlüssel oder Schließzylinder, zum Betätigen eines Sperrgliedes, mit einem Wandler zum Wandeln von mechanischer in elektrische Energie umfassend einen Magnetkreis (5) und eine von dessen Magnetfluss durchsetzte Induktionsspule (1), wobei der Magnetkreis (5) oder die Induktionsspule (1) als beweglicher Bauteil und der jeweils andere Teil als feststehender Bauteil ausgebildet ist und der bewegliche Bauteil von einer Blattfeder (7) gehalten ist und zu Schwingbewegungen in lediglich einer Ebene auslenkbar angeordnet ist, **dadurch gekennzeichnet, dass** die Blattfeder (7) außerhalb der Schwingebene am beweglichen Teil angreift.

2. Vorrichtung nach Anspruch 1, **dadurch gekennzeichnet, dass** der Magnetkreis (5) zwei parallel in Abstand voneinander angeordnete Permanentmagneten (2,3) aufweist, die Induktionsspule (1) im Raum zwischen den beiden Magneten (2,3) jeweils unter Einhaltung eines Spaltes angeordnet und der bewegliche Bauteil zu Schwingbewegungen quer zur Richtung des Magnetflusses auslenkbar angeordnet ist.

3. Vorrichtung nach Anspruch 1 oder 2, **dadurch gekennzeichnet, dass** der Magnetkreis (5) wenigstens einen Permanentmagneten (2) aufweist, welcher von der Induktionsspule (1) umgriffen ist.

4. Vorrichtung nach einem der Ansprüche 1 bis 3, **dadurch gekennzeichnet, dass** der Magnetkreis (5) als beidseitig geschlossener Magnetkreis (5) ausgebildet ist.

5. Vorrichtung nach einem der Ansprüche 1 bis 4, **dadurch gekennzeichnet, dass** die Induktionsspule (1) als feststehender Bauteil und der Magnetkreis (5) als beweglicher Bauteil ausgebildet ist.

6. Vorrichtung nach einem der Ansprüche 1 bis 5, **dadurch gekennzeichnet, dass** die Blattfeder (7) mäanderartig geformt ist.

7. Vorrichtung nach einem der Ansprüche 1 bis 6, **dadurch gekennzeichnet, dass** der Mäander in Richtung zur Angriffsstelle (10) am beweglichen Teil hin eine Verjüngung aufweist.

8. Vorrichtung nach einem der Ansprüche 1 bis 7, **dadurch gekennzeichnet, dass** der Wandler (13) in einem Schloss, vorzugsweise im Zylinderkern (26) eines Zylinderschlosses, derart angeordnet ist, dass die Schwingebene des beweglichen Bauteils parallel zur Einführrichtung (20) eines Schlüssels (25) verläuft, wobei der bewegliche Bauteil beim Einführen des Schlüssels (25) mit einem Mitnehmer (17) des Schlüssels (25) zusammenwirkt und zu Schwingbewegungen ausgelenkt wird.

9. Vorrichtung nach einem der Ansprüche 1 bis 8, **dadurch gekennzeichnet, dass** der Wandler (13) in der Raide (24) eines Schlüssels (25) angeordnet ist.

## Claims

1. An apparatus, for example, key or locking cylinder, for actuating a locking element, having a converter for converting mechanical into electrical energy, comprising a magnetic circuit (5) and an induction coil (1) through which the magnetic flux from the magnetic circuit passes, wherein the magnetic circuit (5) or the induction coil (1) is formed as a movable component and the respective other part is formed as a fixed component and the movable component is held by a leaf spring (7) and is arranged such that it can be deflected so as to carry out oscillating movements in only one plane, **characterized in that** the leaf spring (7) engages the movable part outside the oscillating plane.

2. The apparatus according to claim 1, **characterized in that** the magnetic circuit (5) has two permanent magnets (2, 3) arranged spaced apart in parallel to each other, the induction coil (1) is arranged in the space between the two magnets (2, 3) maintaining a gap to each of them, and the movable component is arranged such that it can be deflected to carry out oscillating movements transverse to the direction of the magnetic flux.

3. The apparatus according to claim 1 or 2, **characterized in that** the magnetic circuit (5) has at least one permanent magnet (2), which is encompassed by the induction coil (1).

4. The apparatus according to any one of the claims 1 to 3, **characterized in that** the magnetic circuit (5) is formed as double-sided closed magnetic circuit (5).

5. The apparatus according to any one of the claims 1 to 4, **characterized in that** the induction coil (1) is formed as fixed component and the magnetic circuit (5) is formed as movable component.

6. The apparatus according to any one of the claims 1 to 5, **characterized in that** the leaf spring (7) is shaped meander-like.

7. The apparatus according to any one of the claims 1 to 6, **characterized in that** the meander has a taper towards the engaging point (10) at the movable part.

8. The apparatus according to any one of the claims 1 to 7, **characterized in that** the converter (13) is arranged in a lock, preferably in the cylinder core (26) of a cylinder lock, such that the oscillating plane of the movable component is parallel to the insertion direction (20) of a key (25), wherein at insertion of the key (25) the movable component cooperates with a driver (17) of the key (25) and is deflected to carry out oscillating movements.

9. The apparatus according to any one of the claims 1 to 8, **characterized in that** the converter (13) is arranged in the rim (24) of a key (25).

## Revendications

1. Dispositif, par exemple clé ou cylindre de fermeture, destiné à actionner un organe de verrouillage, comportant un convertisseur qui sert à convertir de l'énergie mécanique en énergie électrique et qui comprend un circuit magnétique (5) et une bobine d'induction (1) traversée par le flux magnétique du circuit, le circuit magnétique (5) ou la bobine d'induction (1) étant conçu en tant qu'élément mobile et l'autre pièce en tant qu'élément fixe, l'élément mobile étant tenu par un ressort à lames (7) et agencé pour décrire des oscillations dans un seul plan, **caractérisé en ce que** le ressort à lames (7) agit sur l'élément mobile en dehors du plan d'oscillation.

2. Dispositif selon la revendication 1, **caractérisé en ce que** le circuit magnétique (5) comprend deux aimants permanents (2, 3) disposés parallèlement entre eux, à distance l'un de l'autre, **en ce que** la bobine d'induction (1) est disposée dans l'espace compris entre les deux aimants (2, 3) en observant respectivement une fente et **en ce que** l'élément mobile est agencé pour pouvoir décrire des oscillations transversalement à la direction du flux magnétique.

3. Dispositif selon la revendication 1 ou 2, **caractérisé en ce que** le circuit magnétique (5) présente au moins un aimant permanent (2) qui est entouré par la bobine d'induction (1).

4. Dispositif selon l'une des revendications 1 à 3, **caractérisé en ce que** le circuit magnétique (5) est exécuté en tant que circuit magnétique (5) fermé des deux côtés.

5. Dispositif selon l'une des revendications 1 à 4, **caractérisé en ce que** la bobine d'induction (1) est conçue en tant qu'élément fixe et le circuit magnétique (5) en tant qu'élément mobile.

6. Dispositif selon l'une des revendications 1 à 5, **caractérisé en ce que** le ressort à lames (7) forme des méandres.

7. Dispositif selon l'une des revendications 1 à 6, **caractérisé en ce que** les méandres présentent un rétrécissement en direction de la zone d'action (10) sur l'élément mobile.

8. Dispositif selon l'une des revendications 1 à 7, **caractérisé en ce que** le convertisseur (13) est disposé dans une serrure, de préférence dans le cylindre intérieur (26) d'une serrure cylindrique, de telle manière que le plan d'oscillation de l'élément mobile s'étende parallèlement à la direction d'introduction (20) d'une clé (25), l'élément mobile coopérant avec un poussoir (17) de la clé (25) et étant mis en oscillation lors de l'introduction de la clé (25).

9. Dispositif selon l'une des revendications 1 à 8, **caractérisé en ce que** le convertisseur (13) est monté dans l'anneau (24) d'une clé (25).
